# FASCICULE DE BREVET EUROPEEN

(11) **EP 2 522 411 B1**
(45) Date de publication et mention de la délivrance du brevet: **06.01.2016**
(21) Numéro de dépôt: 11165478.6
(22) Date de dépôt: 10.05.2011
(51) Int. Cl.: B01D 19/00, B01D 19/02, A01J 11/04

(54) **CITERNE POUR LA COLLECTE D'UN LIQUIDE**
ZISTERNE ZUM SAMMELN EINER FLÜSSIGKEIT
CISTERN FOR COLLECTING A LIQUID

(43) Date de publication de la demande: 14.11.2012
(73) Titulaire: Etablissements MAGYAR, 21000 Dijon (FR)
(72) Inventeur: Magyar, Laurent, 21000 Dijon (FR); Magyar, Daniel, 75012 Paris (FR)
(74) Mandataire: Lebkiri, Alexandre

(56) Documents cités:
- EP-A1- 0 695 570
- DE-A1- 3 837 765
- DE-U1- 29 825 126
- DE-U1-202006 001 035
- FR-A1- 2 925 879
- GB-A- 2 432 680
- US-A- 2 908 652

## Description

### DOMAINE TECHNIQUE

La présente invention se rapporte à une citerne pour la collecte d'un liquide, et notamment à une citerne pour la collecte de lait.

### ETAT DE LA TECHNIQUE ANTERIEUR

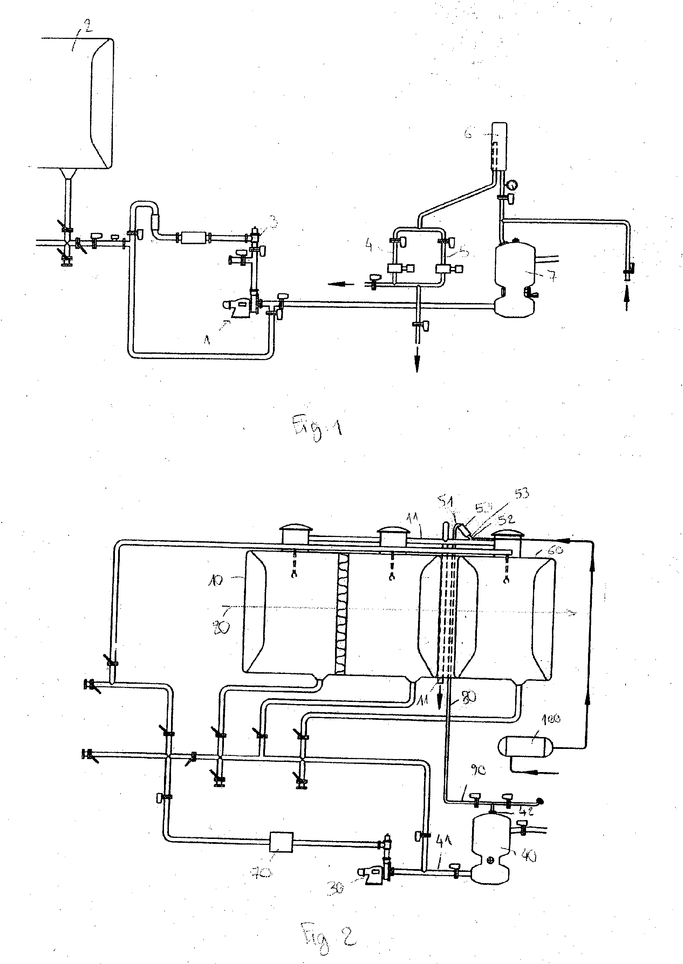

Les citernes pour la collecte de lait comportent généralement un système de pompage, tel que celui représenté sur la figure 1. Ce système de pompage comporte une pompe centrifuge 1 permettant de pomper le lait et de l'injecter dans le corps de citerne 2. Le système de pompage comporte également un clapet anti retour 3 qui est disposé entre le corps de citerne 2 et la pompe centrifuge 1.

Ce système de pompage comporte également un dégazeur 7 permettant d'éliminer l'air inclus au sein du lait aspiré et d'un capteur magnéto-inductif permettant de mesurer les quantités de lait collectées.

La pompe centrifuge 1 utilisée n'étant généralement pas auto-amorçante, il est nécessaire de créer une dépression dans la pompe centrifuge, le dégazeur et en amont de la pompe centrifuge, en début de collecte, afin de remplir la pompe centrifuge et le dégazeur de suffisamment de lait avant de démarrer progressivement le pompage.

Généralement, cette dépression est créée à l'aide de deux venturis 4, 5 montés sur des piquages placés sur la partie supérieure du dégazeur 7. Pour créer cette dépression, les venturis 4, 5 sont alimentés par un flux d'air comprimé stocké dans des réservoirs additionnels et produit par le compresseur du véhicule porteur.

Par ailleurs, le système de pompage comporte des moyens de récupération des mousses 6 qui permettent d'éviter que le venturi n'avale de la mousse.

Toutefois, ces moyens de récupération des mousses alourdissent et compliquent le dispositif de pompage et de lavage.

Le document DE 29825126 U1 divulgue un système pour dégazage d'un liquide.

### EXPOSE DE L'INVENTION

L'invention vise à remédier aux inconvénients de l'état de la technique en proposant une citerne pour la collecte d'un liquide pourvue d'un système de pompage simplifié.

Pour ce faire, est proposé selon un premier aspect de l'invention, une citerne pour la collecte d'un liquide, la citerne comportant un corps de citerne apte à contenir le liquide, le corps de citerne s'étendant suivant un axe de référence, la citerne comportant en outre un système de pompage apte à pomper le liquide depuis l'extérieur vers l'intérieur du corps de citerne, le système de pompage comportant:
- Une pompe centrifuge apte à pomper le liquide ;
- Un dégazeur relié à la pompe centrifuge, le dégazeur étant apte à diminuer la quantité d'air dans le liquide pompé ;
- Un venturi apte à créer une dépression dans le dégazeur, le venturi étant positionné à une distance suivant une direction normale à l'axe de référence d'au moins un mètre au dessus du dégazeur.

En d'autres termes, le venturi est de préférence disposé à une distance verticale d'au moins un mètre au dessus du dégazeur.

Le fait d'augmenter la distance verticale entre le dégazeur et le venturi permet d'éviter que des mousses qui peuvent se développer au sein du dégazeur, notamment en fin de collecte, atteignent le venturi et viennent perturber ses performances. On peut ainsi se passer des moyens de récupération des mousses qui étaient utilisés dans l'art antérieur.

La citerne selon l'invention peut également présenter une ou plusieurs des caractéristiques ci-après prises individuellement ou selon toutes les combinaisons techniquement possibles.

Avantageusement, le corps de citerne comporte une paroi supérieure, le venturi étant positionné sur la paroi supérieure du corps de citerne. Ainsi, le venturi se trouve sur la zone la plus élevée verticalement du corps de citerne, ce qui lui permet d'être à une distance verticale suffisante du dégazeur pour que les mousses ne puissent pas atteindre le venturi.

Avantageusement, le venturi est relié au dégazeur par un tube qui s'étend suivant une direction sensiblement perpendiculaire à l'axe de référence. En d'autres termes, lorsque le corps de citerne est sur un support plan et horizontal, le tube s'étend suivant une direction sensiblement verticale. Cette disposition permet de pouvoir relier la sortie d'air du dégazeur directement à la conduite centralisée de mise à l'atmosphère des compartiments du corps de citerne. Cette conduite comporte une partie de tube verticale qui descend vers le bas de la citerne, l'extrémité de cette partie étant ouverte afin de mettre en communication les compartiments de la citerne à l'atmosphère et afin de permettre aussi l'échappement de l'air venant du dégazeur vers l'extérieur.

Selon différents modes de réalisation, ce tube peut être rigide ou flexible.

Avantageusement, la citerne comporte une conduite de mise à l'air du corps de citerne, le venturi comportant une sortie d'air, la sortie d'air du venturi étant raccordée à la conduite de mise à l'air de la citerne. Ainsi, les éventuelles mousses ou brouillards de liquide qui seraient aspirées aboutissent dans cette conduite, ce qui évite d'avoir recours à des moyens de récupération des mousses supplémentaires.

Selon un mode de réalisation préférentiel de l'invention, le système de pompage comporte un et un seul venturi. En effet, contrairement aux systèmes de pompage de l'art antérieur qui comportent deux venturis, l'invention propose d'utiliser un seul venturi de plus forte capacité que ceux utilisés dans l'art antérieur, qui est placé non plus à proximité du sommet du dégazeur, mais qui est espacé verticalement du dégazeur. Le fait de n'utiliser qu'un seul venturi éloigné du dégazeur ou espacé verticalement du dégazeur permet d'éviter l'utilisation de moyens de récupération de mousse et permet de simplifier le lavage du dispositif de pompage.

La citerne comporte également de préférence un capteur apte à mesurer la quantité de liquide pompé. Ce capteur est de préférence un capteur magnéto-inductif.

L'invention concerne tout particulièrement le cas où la citerne est utilisée pour la collecte du lait.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'une citerne de l'art antérieur ;
- La figure 2, une représentation schématique d'une citerne selon un mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

La figure 2 représente une citerne selon un mode de réalisation de l'invention. Cette citerne comporte un corps de citerne 10 qui s'étend suivant un axe de référence 20. Cette citerne comporte également un système de pompage qui permet de pomper un liquide depuis l'extérieur de manière à introduire ce liquide dans le corps de citerne.

Ce système de pompage comporte une pompe centrifuge 30 apte à pomper le liquide depuis l'extérieur vers l'intérieur du corps de citerne. Le système de pompage comporte également un dégazeur 40 relié à la pompe centrifuge 30. Le dégazeur 40 est apte à diminuer la quantité d'air dans le liquide pompé par la pompe centrifuge en conformité avec la réglementation relative aux mesurages des liquides. Le dégazeur 40 est de préférence aligné horizontalement avec la pompe centrifuge 30.

Le système de pompage comporte également un venturi 50 qui permet de créer une dépression dans le dégazeur 40, dans la pompe centrifuge 30 et en amont de la pompe centrifuge 30, ce qui permet d'introduire du liquide dans la pompe centrifuge en début de pompage afin de l'amorcer.

Ce venturi 50 est de préférence formé par un tube qui présente une striction permettant de créer une dépression d'un côté de cette striction.

Le venturi 50 est positionné à une distance suivant une direction normale à l'axe de référence 20 d'au moins un mètre au-dessus du dégazeur. Lorsque le corps de citerne est horizontal ou sensiblement horizontal, le venturi 50 est donc placé à une distance verticale d'au moins un mètre au dessus du dégazeur 40. Par contre, comme on peut le voir sur la figure 2, le venturi 50 n'est pas nécessairement aligné verticalement au dessus du dégazeur 40.

Contrairement aux systèmes de pompage de l'art antérieur, le système de pompage selon l'invention comporte non pas deux, mais un seul venturi 50 qui est de plus forte capacité que les venturis de l'art antérieur.

Le fait d'utiliser un seul venturi permet d'éviter l'utilisation d'un réservoir tampon de vide, et celle de moyens de récupération des mousses, ce qui apporte un gain conséquent en terme d'efficacité du lavage, car cela permet de limiter la multiplicité des circuits et par la même les risques d'avoir des zones mal lavées.

Par ailleurs, le venturi 50 comporte de préférence une sortie 52 qui est de préférence reliée à des moyens d'alimentation du venturi en air comprimé 100. Ces moyens d'alimentation en air comprimé 100 comportent de préférence au moins un réservoir qui est alimenté en air comprimé produit par un compresseur de la citerne.

Pour cela, le venturi 50 est positionné sur une paroi supérieure 60 du corps de citerne 10. Cette paroi supérieure 60 du corps de citerne 10 est de préférence le toit du corps de citerne, c'est-à-dire que lorsque le corps de citerne est sur un support plan et horizontal, on appelle « partie supérieure » du corps de citerne la partie la plus haute ou sensiblement la plus haute du corps de citerne 10. Le venturi 50 comporte une entrée d'air 51 qui est de préférence reliée à la sortie 42 du dégazeur 40 par un tube 80 qui s'étend de préférence suivant une direction normale à l'axe de référence, c'est-à-dire que lorsque le corps de citerne 10 est sur un support plan et horizontal, le tube 80 s'étend de préférence suivant une direction sensiblement verticale. Le tube 80 peut être rigide ou flexible. Ce tube 80 mesure de préférence au moins un mètre, et de manière encore plus préférentielle au moins un 1.5 mètre. Ce tube 80 peut être relié à la sortie 42 du dégazeur 40 par l'intermédiaire d'un autre tube 90 qui s'étend parallèlement à l'axe de référence lorsque le dégazeur 40 et le venturi 50 ne sont pas alignés suivant une direction normale à l'axe de référence.

En outre, le fait de disposer le venturi 50 sur le toit du corps de citerne, permet de relier la sortie 52 du venturi 50 à une conduite 11 de mise à l'air de la citerne via un piquage 53. Ainsi, les éventuelles mousses ou brouillards de liquide qui seraient aspirées aboutissent dans cette conduite 11, ce qui évite d'avoir recours à des moyens de récupération des mousses supplémentaires.

Ce système de pompage comporte également un capteur 70 qui est apte à mesurer la quantité de liquide pompé et qui est relié à la pompe centrifuge 30. Le dégazeur permet d'éviter que de l'air ne vienne fausser la mesure du capteur. A la place du capteur, on peut également envisager d'autres moyens de mesure de la quantité de liquide pompé, comme par exemple des volucompteurs.

## Revendications

1. Citerne pour la collecte d'un liquide, la citerne comportant un corps de citerne (10) apte à contenir le liquide, le corps de citerne s'étendant suivant un axe de référence (20), le corps du citerne comportant une paroi supérieure, la citerne comportant en outre un système de pompage apte à pomper le liquide depuis l'extérieur vers l'intérieur du corps de citerne, le système de pompage comportant :
- Une pompe centrifuge (30) apte à pomper le liquide ;
- Un dégazeur (40) relié à la pompe centrifuge (30), le dégazeur (40) étant apte à diminuer la quantité d'air dans le liquide pompé ;
- Un venturi (50) apte à créer une dépression dans le dégazeur (40) ;
ladite citerne étant **caractérisée en ce que** le venturi (50) est positionné sur la paroi supérieure (60) du corps de citerne (10), à une distance suivant une direction normale à l'axe de référence d'au moins un mètre au-dessus du dégazeur (40) et **en ce que** la citerne comporte une conduite de mise à l'air (11) de la citerne, le venturi (50) comportant une sortie (52), la sortie (52) du venturi (50) étant raccordée à la conduite de mise à l'air (11) de la citerne.

2. Citerne selon la revendication précédente, **caractérisée en ce que** le système de pompage comporte un et un seul venturi (50).

3. Citerne selon l'une des revendications précédentes, dans laquelle le venturi (50) est relié au dégazeur (40) par un tube (80) qui s'étend suivant une direction sensiblement perpendiculaire à l'axe de référence (10).

4. Citerne selon la revendication précédente, dans laquelle le tube (80) est rigide.

5. Citerne selon la revendication 4, dans laquelle le tube (80) est flexible.

6. Citerne selon l'une des revendications précédentes, **caractérisée en ce qu'**elle comporte en outre un capteur (70) apte à mesurer la quantité de liquide pompé.

7. Citerne selon la revendication précédente, **caractérisé en ce que** le capteur (70) est un capteur magnéto-inductif.

## Patentansprüche

1. Zisterne zum Sammeln einer Flüssigkeit, wobei die Zisterne einen Zisternenkörper (10) aufweist, der imstande ist, die Flüssigkeit zu enthalten, wobei sich der Zisternenkörper gemäß einer Referenzachse (20) erstreckt, wobei der Zisternenkörper eine obere Wand aufweist, wobei die Zisterne ferner ein Pumpsystem aufweist, das imstande ist, die Flüssigkeit von außen in den Zisternenkörper zu pumpen, wobei das Pumpsystem aufweist:
- eine Zentrifugalpumpe (30), die imstande ist, die Flüssigkeit zu pumpen,
- einen Entgaser (40), der mit der Zentrifugalpumpe (30) verbunden ist, wobei der Entgaser (40) imstande ist, die Luftmenge in der gepumpten Flüssigkeit zu verringern,
- eine Venturidüse (50), die imstande ist, einen Unterdruck im Entgaser (40) zu erzeugen,
wobei die Zisterne **dadurch gekennzeichnet ist, dass** die Venturidüse (50) auf der oberen Wand (60) des Zisternenkörpers (10) in einem Abstand gemäß einer normalen Richtung zur Referenzachse von mindestens einem Meter über dem Entgaser (40) positioniert ist und dass die Zisterne eine Entlüftungsleitung (11) der Zisterne aufweist, wobei die Venturidüse (50) einen Ausgang (52) aufweist, wobei der Ausgang (52) der Venturidüse (50) mit der Entlüftungsleitung (11) der Zisterne verbunden ist.

2. Zisterne nach vorangehendem Anspruch, **dadurch gekennzeichnet, dass** das Pumpsystem eine und eine einzige Venturidüse (50) aufweist.

3. Zisterne nach einem der vorangehenden Ansprüche, wobei die Venturidüse (50) mit dem Entgaser (40) durch ein Rohr (80) verbunden ist, das sich gemäß einer Richtung etwa senkrecht zur Referenzachse (10) erstreckt.

4. Zisterne nach vorangehendem Anspruch, wobei das Rohr (80) starr ist.

5. Zisterne nach vorangehendem Anspruch, wobei das Rohr (80) flexibel ist.

6. Zisterne nach einem der vorangehenden Ansprüche, **dadurch gekennzeichnet, dass** sie ferner einen Sensor (70) aufweist, der imstande ist, die Menge der gepumpten Flüssigkeit zu messen.

7. Zisterne nach vorangehendem Anspruch, **dadurch gekennzeichnet, dass** der Sensor (70) ein Magnetinduktionssensor ist.

## Claims

1. A tank for collecting a liquid, the tank having a tank body (10) able to hold the liquid, the tank body extending along a reference axis (20), the tank body having an upper wall, the tank further having a pumping system able to pump the liquid from the outside to the inside of the tank body, the pumping system having:
- a centrifugal pump (30) able to pump the liquid;
- a degasser (40) interconnected to the centrifugal pump (30), the degasser (40) being able to reduce the amount of air in the pumped liquid;
- a venturi (50) able to create a vacuum in the degasser (40);
said tank being **characterised in that** the venturi (50) is positioned on the upper wall (60) of the tank body (10), at a distance along a direction normal to the reference axis of at least one metre above the degasser (40) and **in that** the tank has a vent line (11) of the tank, the venturi (50) having an outlet (52), the outlet (52) of the venturi (50) being connected to the vent line (11) of the tank.

2. The tank according to the preceding claim, **characterised in that** the pumping system has one and only one venturi (50).

3. The tank according to one of the preceding claims, wherein the venturi (50) is interconnected to the degasser (40) by a tube (80) which extends along a direction substantially perpendicular to the reference axis (10).

4. The tank according to the preceding claim, wherein the tube (80) is rigid.

5. The tank according to claim 4, wherein the tube (80) is flexible.

6. The tank according to one of the preceding claims, **characterised in that** it further has a sensor (70) able to measure the amount of pumped liquid.

7. The tank according to the preceding claim, **characterised in that** the sensor (70) is a magneto-inductive sensor.
